Europäisches Patentamt

(19) European Patent Office

Office européen des brevets

(11) Publication number: **0 139 060**
A1

(12) # EUROPEAN PATENT APPLICATION

(21) Application number: 83306790.3

(22) Date of filing: 08.11.83

(51) Int. Cl.⁴: **G 01 G 11/08**
G 01 G 13/20

(30) Priority: 29.07.83 US 518446

(43) Date of publication of application:
02.05.85 Bulletin 85/18

(84) Designated Contracting States:
AT BE DE FR GB IT LU NL SE

(71) Applicant: VIBRA SCREW INCORPORATED
755 Union Boulevard
Totowa New Jersey 07511(US)

(72) Inventor: Wahl, Eugene Robert
40 Lynwood Road
Cedar Grove New Jersey, 07009(US)

(72) Inventor: Wahl, Richard Carl
66 Holton Lane
Essex Falls New Jersey, 07021(US)

(74) Representative: Boon, Graham Anthony et al,
Elkington and Fife High Holborn House 52/54 High
Holborn
London, WC1V 6SH(GB)

(54) Material feeding apparatus.

(57) A material feeding apparatus is disclosed having a first storage bin for storing a preselected weight of material, a transfer device at the outlet of the first storage bin, a second storage bin (50) at the outlet of the transfer device for storing material, a continuous feed device at the outlet of the second storage bin and a controller for continuously measuring the weight of material in the second storage bin (50) and operating the transfer device and the continuous feed device to maintain a preselected loss in weight as a function of time.

The continuous feed means includes an auger (56) continuously rotating at a rate determined by the controller. The controller continuously measures the weight of material in the second storage bin (50) and the continuous feed device. A vibration device (58) is provided for vibrating the second storage bin (50) and the continuous feed device.

EP 0 139 060 A1

./...

Croydon Printing Company Ltd.

FIG.2

## Material feeding apparatus

The present invention relates generally to material feeding apparatus and more specificially to a continuous weight loss system.

In the field of continuous weight loss systems, the apparatus usually includes a batch bin located above a continuous loss bin. A feeding device at the outlet of the continuous loss bin is controlled to produce a desired feeding rate. The feeding device is driven by an error signal which is a function of the desired weight loss against actual weight loss in the continuous loss bin as a function of time.

Heretofore, continuous weight loss feeders have not been able to handle free flowing or sticky substances in powder, pellet, or flake form. The caking, sticking and other problems associated with the substances have not made them capable of being accurately dispensed on a time basis in the standard weight loss system. Thus, there exists a need for a continuous weight loss system which is capable of handling free flowing or sticky substances in powder, pellet or flake form.

An object of an aspect of the present invention is to provide a continuous weight loss system which is capable of accurately dispensing free flowing or sticky substances in powder, pellet or flake form.

Another object of an aspect of the present invention is to provide a continuous weight loss system of increased accuracy of dispensing.

According to the present invention there is provided a material feeding apparatus having a first storage means means for storing a preselected weight of material, a transfer means at the outlet of said first storage means, a second storage means at the outlet of said transfer means for storing material, a continuous feed means at the outlet of said second storage means and control means for continuously measuring the weight of material in said second storage means and operating said transfer means and said continuous feed means to maintain a preselected loss in weight as a function of time, characterised in that said continuous feed means includes an auger continuously rotating at a rate determined by said control means, said control means continuously measures the weight of material in said second storage means and said continous feed means, and vibration means are provided for vibrating said second storage means and said continuous feed means.

The continuous loss bin is preferably mounted by pinned link arms to transfer means whose weight is sensed by load cells.

In the accompanying drawings:

Figure 1 is a block diagram of an apparatus of the prior art; and

Figure 2 is a perspective view of a continuous loss bin incorporating the principles of the present invention.

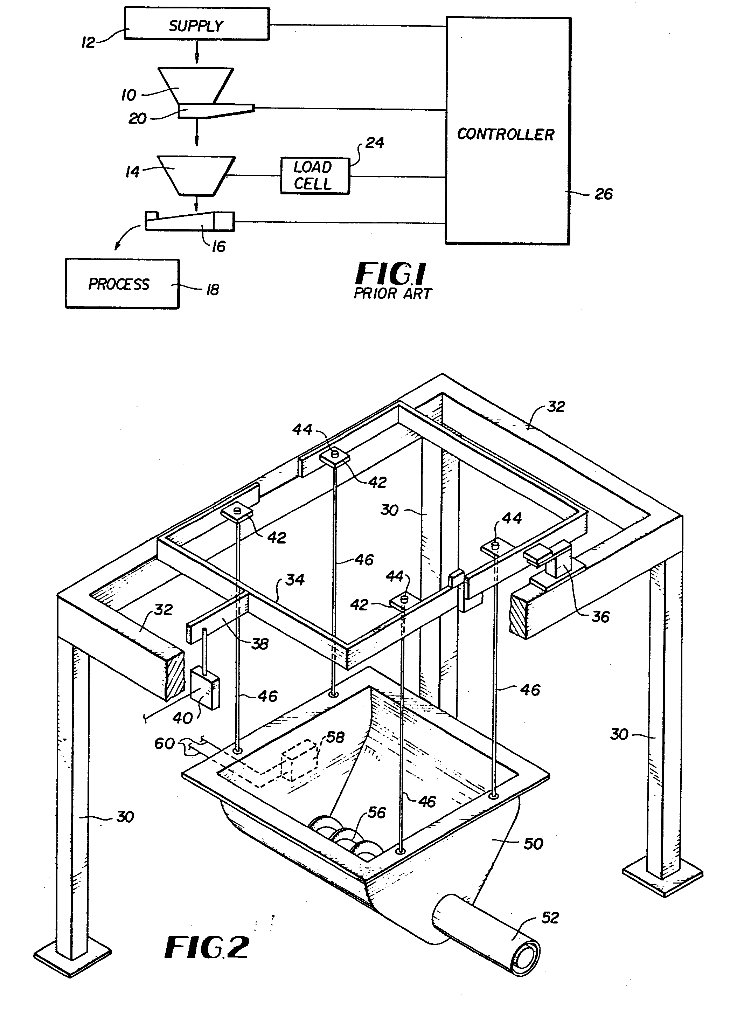

Figure 1 illustrates a prior art weight control system which includes a batch bin 10 receiving a material supply 12. Below the batch bin 10 is a continuous loss bin 14 having a continuous feeding device 16 therebelow and separate from the continuous loss bin. The continuous feeding device 16 provides material to a process 18, illustrated graphically as a box. The outlet of the batch bin 10 includes a transfer device 20 which allows an accumulated preset batch load to be transferred to the continuous loss bin 14 at a preselected weight of material in the continuous loss bin 14. Load cell 24 determines the weight in the continuous loss bin 14. A controller 26 provides control of the supply 12 to supply material to the batch bin 10. When a specific weight of material in the continuous loss bin 14 is sensed by load cell 24, the controller 26 opens the transfer device 20 to transfer a preselected amount of material, namely a batch, from the batch bin 10. The controller 26 controls the speed of the continuous feeder 16 as a function of the desired weight loss compared to the actual weight sense by load cell 24 of the continuous loss bin 14. An example of the controller 26 is shown in U.S. Patent 4,111,336 to Ward et al. This is but one of many controllers that may be used but not form part of the present invention.

Although the prior art weight control system illustrated in Figure 1 is adequate for a majority of the materials, it is incapable of handling free flowing or sticky substances in powder, pellet, or flake form. Typical examples of materials which cannot be accurately dispensed by the prior art system are cement, salt, alum, sulfur, titanium oxide, stearate salts, anhydrous lime, wood flour, soda ash, clays phosphate rocks, pigments, dyes, zinc oxide, copper oxide, powdered metals, gelatine and carbon black.

One device capable of accurately dispensing the difficult-to-dispense materials is an auger and trough which are vibrated as disclosed in U.S. Patent 2,880,252 to Eugene A. Wahl. The dispensing of a measured amount of powder into a trough and vibrating auger in combination with a scale is illustrated in U.S. Patent 3,001,672 also with Eugene A. Wahl. The premeasured batch is then dispensed by the vibrating auger while the weight device is locked to prevent any damage during the operating and dispensing. Thus the industry has never considered the use of a vibrator auger of the first mentioned Wahl patent for a continuous weight loss system since it was feared that the vibration would not allow accurate measurement of the weight of the continuous loss bin. For larger substances, a vibrating pan has been used at the outlet of a continuous loss bin, but this form of dispensing is not practised for free flowing or sticky substances.

The present invention incorporates a vibrated auger.

as a continuous feed mechanism with a continuous loss bin. This provides accurate dispensing of the materials and continuous weight loss system.

Figure 2, which illustrates an embodiment of the present invention, shows a support frame having four legs 30, three of which are shown, supporting a rectangular support frame 32. A rectangular transfer frame 34 is within the support frame 32 and is attached thereto at a pair of opposed points by flucture pivots 36. A knife blade 38 extends from the transfer frame 34 and rests on a load cell 40. Secured to the support frame 34 are four plates 42 having an aperture 44 therein.

The continuous loss bin 50 is secured to the transfer frame 34 by four suspension rods or links 46 which are pivotally connected to the plates 42 at one end and to the continuous loss bin 50 at their other end. Extending from the bottom of the continuous loss bin 50 is a tube 52. An auger 56 is located in the continuous loss bin 50 and extends through the tube 52. Mounted to the exterior of the continuous weight loss bin 50 is a vibration device 58 which is electrically driven by a power source through wires 60 and produces high frequency vibrations in a substantially horizontal plane. The vibration device 58 is well known and thus is not shown in detail.

The motion produced by the vibration device 58 is of a high frequency and because of the suspension rods 46 substantially no motion is induced in the transfer frame 34 with substantially no motion to the load cell 40. Since the vibrations, if any, reaching the load cell is uniform, they are electronically filtered. Thus, although it would appear that a vibrating dispenser would cause substantial error in a continuous weight loss system, which uses load cells, the opposite has proved to be true. As a matter of fact, only with a vibrating auger dispenser in the continuous weight loss system can the various types of

- 5 -

0139060

materials previously listed be dispensed in a continuous weight system.

Various modifications may be made to the embodiment described above. For example, the continuous weight loss bin 50 and the continuous dispenser including auger 56 are formed as a single unit since this is the preferred embodiment which is capable of using a single vibrator device 58. However, alternatively, though not preferred, the continuous loss bin 50 and the auger dispenser 56 may be separate and connected to each other in such a way that the bin and the auger are vibrated using separate vibrating devices, but with the load cell being responsive to the weight of material in the continuous loss bin and the auger portion.

CLAIMS:

1. A material feeding apparatus having a first storage means for storing a preselected weight of material, a transfer means at the outlet of said first storage means, a second storage means at the outlet of said transfer means for storing material, a continuous feed means at the outlet of said second storage means and control means for continuously measuring the weight of material in said second storage means and operating said transfer means and said continuous feed means to maintain a preselected loss in weight as a function of time, characterised in that said continuous feed means includes an auger continuously rotating at a rate determined by said control means, said control means continuously measures the weight of material in said second storage means and said continuous feed means, and vibration means. are provided for vibrating said second storage means and said continuous feed means.

2. An apparatus according to claim 1, wherein said continuous feed means is mounted to said second storage means.

3. An apparatus according to claim 2, wherein said control means includes a single means for measuring the weight of material in said second storage means and said continuous feed means.

4. An apparatus according to claim 2 or 3, wherein said vibration means includes a single vibrator for said second storage means and said continuous feed means.

5. An apparatus according to claim 2, including a support frame, a load cell mounted to said support frame, and a transfer frame mounted to said support frame and said load cell, said second storage means being mounted to said transfer frame.

6. An apparatus according to claim 5, wherein said second storage means is pivotally mounted to said transfer frame by pinned suspension rods.

7. An apparatus according to any preceding claim, wherein said vibration means produces high frequency vibrations in a substantially horizontal plane.

0139060

**FIG.1**
PRIOR ART

**FIG.2**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 606 518 (ACRISON INC.)<br>* Page 5, line 18 - page 6, line 22; page 7, line 12 - page 9, line 3; figure 1 * | 1-3 | G 01 G 11/08<br>G 01 G 13/20 |
| A |  | 5 | |
| A | FR-A-1 595 733 (CARL SCHENCK MASCHINENFABRIK GMBH)<br>* Figure 4 * | 1,2 | |
| A | EP-A-0 029 236 (MTU MOTOREN-UND TURBINEN-UNION MÜNCHEN GMBH)<br>* Page 4, line 10 - page 6, line 11 * | 1,3 | |
| A | US-A-3 363 806 (BLAKESLEE et al.)<br>* Column 2, lines 14-25; figure 1 * | 1,4 | **TECHNICAL FIELDS SEARCHED (Int. Cl.4)**<br><br>B 65 G 65/00<br>G 01 G 11/00<br>G 01 G 13/00<br>G 05 D 11/00 |
| D,A | US-A-3 001 672 (WAHL) | | |
| A | US-A-2 800 252 (WAHL) | | |
| A | DE-U-1 902 422 (HUTHER & CO.)<br><br>---    -/- | | |

The present search report has been drawn up for all claims

| Place of search | Date of completion of the search | Examiner |
|---|---|---|
| BERLIN | 24-10-1984 | SIMON J J P |

European Patent
Office

**EUROPEAN SEARCH REPORT**

| | **DOCUMENTS CONSIDERED TO BE RELEVANT** | | Page 2 | |
|---|---|---|---|---|
| Category | Citation of document with indication, where appropriate, of relevant passages | Relevant to claim | CLASSIFICATION OF THE APPLICATION (Int. Cl.4) | |
| A | US-A-3 203 599 (RENNER) | | | |
| | ----- | | | |
| | | | **TECHNICAL FIELDS SEARCHED (Int. Cl.4)** | |
| | The present search report has been drawn up for all claims | | | |

| Place of search | Date of completion of the search | Examiner |
|---|---|---|
| BERLIN | 24-10-1984 | SIMON J J P |